# EUROPÄISCHE PATENTSCHRIFT

(11) **EP 1 289 721 B1**
(45) Veröffentlichungstag und Bekanntmachung des Hinweises auf die Patenterteilung: **03.08.2005**
(21) Anmeldenummer: 01947308.1
(22) Anmeldetag: 22.05.2001
(51) Int. Cl.: B29C 31/00, B60J 3/02

(54) **SONNENBLENDEN-AUSSENFLÄCHEN**
OUTER SURFACES OF SUN VISORS
SURFACES EXTERIEURES DE PARE-SOLEIL

(30) Priorität: 22.05.2000 DE 10025290
(43) Veröffentlichungstag der Anmeldung: 12.03.2003
(73) Patentinhaber: Fico I.T.M., S.A., 08191 Rubi, Barcelona (ES)
(72) Erfinder: ESTEBAN, Miguel Angel Sabrido, E-08041 Barcelona (ES)
(74) Vertreter: Hess, Peter K., Dipl.-Phys.
(86) Internationale Anmeldenummer: PCT/EP2001/005898
(87) Internationale Veröffentlichungsnummer: WO 2001/089789

(56) Entgegenhaltungen:
- DE-U- 8 402 168
- US-A- 5 271 882
- PATENT ABSTRACTS OF JAPAN vol. 1997, no. 10, 31. Oktober 1997 (1997-10-31) & JP 09 142143 A (DELTA KOGYO CO LTD), 3. Juni 1997 (1997-06-03)
- PATENT ABSTRACTS OF JAPAN vol. 1997, no. 02, 28. Februar 1997 (1997-02-28) & JP 08 268057 A (HAYASHI GIJUTSU KENKYUSHO:KK), 15. Oktober 1996 (1996-10-15)
- PATENT ABSTRACTS OF JAPAN vol. 1999, no. 08, 30. Juni 1999 (1999-06-30) & JP 11 077807 A (NEOX LAB:KK), 23. März 1999 (1999-03-23)
- PATENT ABSTRACTS OF JAPAN vol. 010, no. 246 (M-510), 23. August 1986 (1986-08-23) & JP 61 076343 A (MITSUI PETROCHEM IND LTD), 18. April 1986 (1986-04-18)

## Beschreibung

Die Erfindung betrifft eine Sonnenblende, aufweisend einen Sonnenblenden Körper und eine Stoffhülle, wobei die Stoffhülle einen Reifsverschlufs aufweist.

### 1. Anwendungsgebiet

Die Erfindung betrifft Sonnenblenden für Kraftfahrzeuge zur Abschattung des Kopfbereichs von Insassen gegen Lichteinstrahlung. Derartige Sonnenblenden können in Form, Oberflächenbeschaffenheit und Funktionalität unterschiedlich ausgebildet sein.

### 2. Stand der Technik

Sonnenblenden werden im wesentlichen hergestellt, seitdem Kraftfahrzeuge produziert werden. Sie sind ein wesentlicher Bestandteil der Innenausstattung eines Kraftfahrzeugs und können in Abhängigkeit von der Quälität der Innenausstattung in Gestaltung, Form, verwendeten Materialien und Struktur variieren. Des weiteren können die Sonnenblenden mit zusätzlichen technischen Geräten versehen werden, wie zum Beispiel mit Spiegeln und Innenleuchten.

Im Stand der Technik sind verschiedene Verfahren zur Herstellung von Sonnenblenden bekannt. Erste technische Ausführungen von Sonnenblenden bestehen beispielsweise aus in der Form von Sonnenblenden geformten Drahtrahmen, die dann durch ein stabilisierendes Element, wie zum Beispiel Pappe, ausgefüllt werden. Auf die großflächigen Seiten des stabilisierenden Elements werden dann Schaumstoffschichten geklebt, die den Drahtrahmen überdecken. Die auf diese Weise gebildete Sandwichstruktur wird nachfolgend beispielsweise durch eine Kunststoff- oder Stoffschicht ummantelt, um die Sonnenblende optisch ansprechend zu gestalten.

Neben der Formvorgabe und Stabilisierung der Sonnenblende dient der Drahtrahmen der Aufnahme von Gelenken, um die Sonnenblende an geeigneter Stelle im Fahrzeug zu befestigen. Gemäß einer weiteren Ausführungsform nach dem Stand der Technik wird der Drahtrahmen innerhalb einer Form durch Kunststoff umschäumt und bildet einen Sonnenblendenkörper. Dieser wird, wie vorhergehend beschrieben, durch beispielsweise Kunststoff oder Stoff ummantelt.

Gemäß eines weiteren, an sich bekannten Herstellungsverfahrens werden Sonnenblendenkörper durch Blasformung hergestellt, wobei ein weicher Kunststoffschlauch mittels Druckluft in einem Blaswerkzeug aufgeweitet wird. Das Blaswerkzeug gibt dabei die spätere Gestalt des Sonnenblendenkörpers vor. Derartige Kunststoff-Sonnenblendenkörper sind mit geringem verfahrenstechnischen Aufwand herstellbar, sind jedoch in Oberflächengestaltung und Erscheinungsbild nicht ansprechend. Bei Bedarf werden die Sonnenblendenkörper beispielsweise durch Kunststoffschichten oder Stoff ummantelt und auf diese Weise an die Innenausstattung des Kraftfahrzeugs angepasst. Dabei ist es notwendig, dass wesentliche Arbeitsschritte, wie z. B. das Aufziehen der Stoffhülle auf den Sonnenblendenkörper in Handarbeit ausgeführt werden.

Aufgrund der Vielzahl der Verfahrensschritte zur Herstellung eines Sonnenblendenkörpers, die teilweise in Handarbeit ausgeführt werden, ist die Produktion von optisch ansprechenden Sonnenblenden verfahrenstechnisch aufwendig sowie zeit- und kostenintensiv. Eine farbliche Abstimmung der Innengestaltung des Kraftfahrzeugs und der Sonnenblende ist nur über die Wahl passender Stoff- oder Kunststoffummantelungen möglich.

Zur Ummantelung der Sonnenblendenkörper mit Kunststoff wird herkömmlicherweise Ultraschallschweißen verwendet. Dabei kann der ummantelnde Kunststoff in Farbe und Oberflächenstruktur variieren und so das Erscheinungsbild der Sonnenblende passend gestalten. Bei der besonders aufwendigen Ummantelung mit Stoff wird das Erscheinungsbild des Sonnenblendenkörpers und seine Haptik besonders luxuriösen Anforderungen angepasst. Dazu wird ein strumpfförmiger Stoffüberzug über den Sonnenblendenkörper gezogen. Zur Fixierung des Stoffüberzugs weist der Sonnenblendenkörper eine spezielle Klemmvorrichtung auf, so dass damit das noch offene Ende des strumpfförmigen Stoffüberzugs verschlossen wird und der Sonnenblendenkörper vollständig von einer Stoffhülle umgeben ist

Der im Blasformungsverfahren hergestellte Klemmmechanismus zum Verschließen der Stoffhülle ist in seiner Herstellung sehr aufwendig und kann nicht mehrfach geschlossen und geöffnet werden, wie z. B. zum Austauschen der Stoffhülle. Andererseits wird mit Hilfe des Klemmmechanismus die Stoffhülle derart verschlossen, dass nur eine Naht sichtbar bleibt.

Daraus folgen zwei weitere Probleme. Die aufwendige Produktion eines Klemmmechanismus muss in den Herstellungsprozess des Sonnenblendenkörpers eingeschlossen sein. Außerdem sind die Stoffummantelungen nicht auswechselbar, so dass insbesondere bei Verschmutzung oder Abnutzung nur eine vollständig neue Sonnenblende eingebaut werden kann, um den Schaden zu beheben.

Eine Sonnenblende gemäß dem Oberbegriff des Anspruchs 1 ist aus DE-U-8402168 bekennt.

### 3. Zusammenfassung der Erfindung

Die Lösung der Probleme des Standes der Technik erfolgt durch die vorliegende Erfindung gemäß Patentansprüch 1.

Vorteilhafte Weiter bildungen der Erfindung sind Gegenstand der abhängigen Ausprüche.

Die Erfindung gemäß Patentanspruch 1 betrifft eine Sonnenblende mit einer Stoffhülle mit Reißverschluss für Sonnenblendenkörper. Die Stoffhülle mit Reißverschluss ist einfach auf den Sonnenblendenkörper aufziehbar und auswechselbar, wobei der Reißverschluss so in die Stoffhülle eingenäht ist, dass er teilweise oder vollständig durch die Enden der Stoffhülle, an denen er befestigt ist, abgedeckt wird.

Die Herstellung eines Klemmmechanismus für die Stoffhülle im Sonnenblendenkörper entfällt dadurch und die Stoffhülle ist auch durch einen Laien beliebig austauschbar.

Gemäß einer weiteren Ausführungsform wird der Reißverschluss nicht sichtbar an einer der schmalen Stirnseiten des Sonnenblendenkörpers, bevorzugt an der den Fahrzeuginsassen abgewandten Seite und in unmittelbarer Nachbarschaft zur Lagerachse der Sonnenblende, angeordnet, um dadurch das Erscheinungsbild der Sonnenblende zu verbessern.

### 4. Kurze Beschreibung der Zeichnung

Die bevorzugten Ausführungsformen der Erfindung ergeben sich aus den Unteransprüchen und werden mit Hilfe der nachfolgenden Beschreibung und der Zeichnung näher erläutert. Es zeigt:
- Fig. 1 (A): eine schematische Darstellung von Verfahrensschritt 1 eines Verfahrens zur Herstellung blasgeformter Sonnenblendenkörper gemäß einer ersten bevorzugten Ausführungsform aus Polypropylen: Einbringen des Kunststoffschlauchs zwischen die Blaswerkzeughälften;
- Fig. 1 (B): eine schematische Darstellung von Verfahrensschritt 2 eines Verfahrens zur Herstellung blasgeformter Sonnenblendenkörper gemäß der ersten bevorzugten Ausführungsform: Aufgeblasener Polypropylenschlauch bei geschlossenem Blaswerkzeug;
- Fig. 2 (A): die Ausschnittsdarstellung einer Sonnenblende mit Stoffhülle gemäß einer ersten bevorzugten Ausführungsform der Erfindung, wobei der die Stoffhülle verschließende Reißverschluss an den gegenüberliegenden Enden der Stoffhülle befestigt ist;
- Fig. 2 (B): die Ausschnittsdarstellung einer Sonnenblende mit Stoffhülle gemäß einer zweiten bevorzugten Ausführungsform, wobei der die Stoffhülle verschließende Reißverschluss an um 180° umgeschlagenen gegenüberliegenden Enden der Stoffhülle befestigt ist; und
- Fig. 2 (C): die Darstellung einer Sonnenblende mit Stoffhülle gemäß der ersten oder zweiten bevorzugten Ausführungsform, wobei der die Stoffhülle verschließende Reißverschluss an einer der schmaleren Stirnseiten der Sonnenblende angeordnet ist.

### 5. Detaillierte Beschreibung der Erfindung

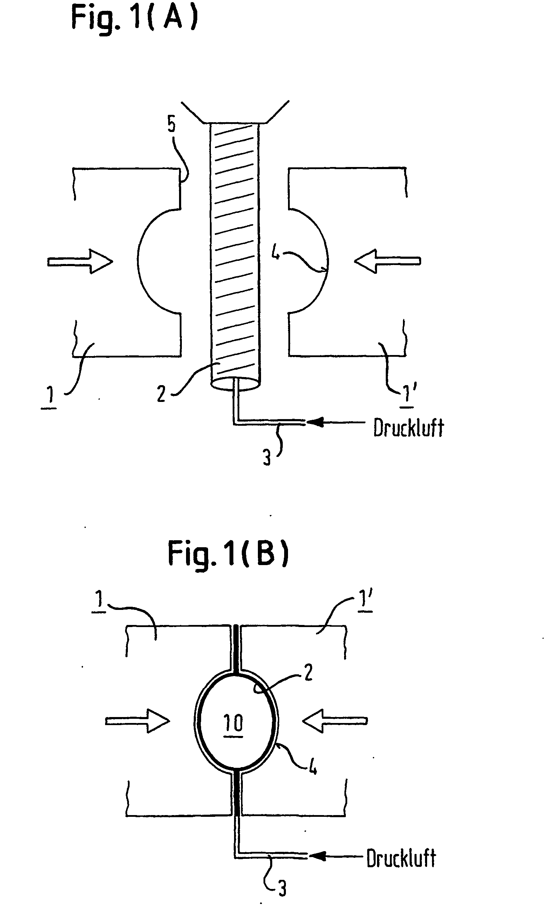

Die Herstellung des erfindungsgemäßen Sonnenblendenkörpers erfolgt bevorzugt durch ein an sich bekanntes Blasformungsverfahren. Dieses Verfahren ist schematisch in Fig. 1 (A) und (B) dargestellt. Ein auf ca. 180 °C erwärmter Kunststoffschlauch, bevorzugt ein Polypropylenschlauch 2, wird zwischen zwei Blaswerkzeughälften 1,1' eingebracht. Die Erwärmung des Polypropylenschlauchs 2 dient der besseren Verformbarkeit im Blaswerkzeug.

Die Blaswerkzeughälften 1,1' werden dann in Pfeilrichtung aufeinanderzu bewegt, bis sich die Kanten 5 der Blaswerkzeughälften 1,1' aufeinander abstützen und das Blaswerkzeug dichtend verschließen (Fig. 1 (B)). Danach wird der sich in dem Blaswerkzeug befindende Polypropylenschlauch 2 über eine Druckluftleitung 3 aufgeweitet und dadurch in die durch das Blaswerkzeug vorgegebene Gestalt gebracht. Durch den Aufweitvorgang wird der Kunststoff gegen die Innenflächen 4 der Blaswerkzeughälften 1,1' gedrückt und nimmt die zu den Innenflächen 4 und deren Oberflächenbeschaffenheit, wie Struktur und Rauheit, komplementäre Gestalt an.

Es werden Blaswerkzeughälften 1,1' unterschiedlicher Innenflächenstruktur verwendet, um blasgeformte Sonnenblendenkörper 10 unterschiedlicher Oberflächenstruktur herzustellen. Mögliche Profile der Innenfläche 4 der Blaswerkzeughälften 1,1' sind Noppen, Rillen, strukturierte Karos und andere, die jeweils unterschiedliche optische und haptische Effekte beim Benutzer erzeugen.

Neben der Oberflächenstruktur des blasgeformten Sonnenblendenkörpers 10 kann seine Farbe variiert werden. Die Farbvariation erfolgt durch das Einfärben des Polypropylens, bevor dieses zu einem Polypropylenschlauch 2 extrudiert wird. Polypropylen wird beispielsweise durch die Anwendung organischer oder anorganischer Pigmente eingefärbt. Die durchsichtige oder undurchsichtige farbliche Gestaltung des blasgeformten Sonnenblendenkörpers 10 wird auf diese Weise auf die Innenausstattung des Kraftfahrzeugs abgestimmt, ohne dass aufwendige Verfahrensschritte, wie beispielsweise das Zuschneiden und Ultraschallschweißen einer Kunsistoffummantelung, wie oben beschrieben, notwendig sind.

Somit kann mit dem vorliegenden Verfahren eine kostengünstige, in Farbe und Oberflächengestaltung an die Innenausstattung des Kraftfahrzeugs angepasste blasgeformte Sonnenblende hergestellt werden.

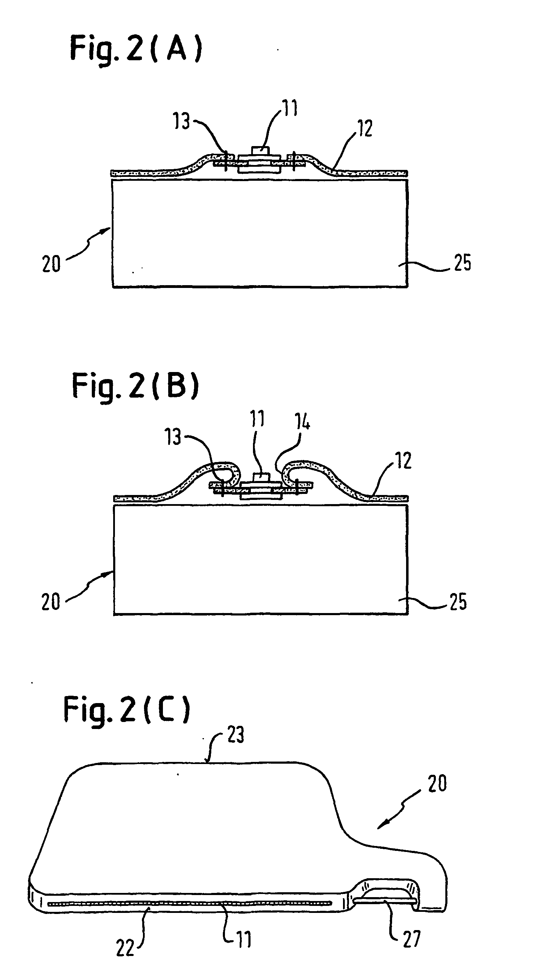

Die Sonnenblenden sind mit einer Stoffhülle 12 mit Reißverschluss 11 zur Ummantelung eines Sonnenblendenkörpers 25 versehen. Der die Stoffhülle 12 des Sonnenblendenkörpers 25 verschließende Reißverschluss 11 verläuft bevorzugt an einer der schmalen Stirnseiten des Sonnenblendenkörpers 25 (Fig. 2 (C)) und noch mehr bevorzugt an derjenigen schmalen Stirnseite der Sonnenblende, die sich in unmittelbarer Nachbarschaft zur Lagerachse 27 der Sonnenblende erstreckt. Bei dieser Ausführungsform kann der stoffmnmantelte Sonnenblendenkörper 25 so im Fahrzeuginneren eingebaut werden, dass sich die Stirnseite 22 der Sonnenblende 20 mit Reißverschluss 11 an der den Insassen abgewandten Seite befindet und dadurch nicht sichtbar ist. Zwei bevorzugte Ausführungsformen stellen die Fign. 2 (A) und (B) dar.

Wie Fign. 2 (A) und (B) zeigen, ist der Reißverschluss 11 auf verschiedene Art in die Stoffhülle eingenäht. Bezugnehmend auf Fig. 2 (A) ist der Reißverschluss 11 beispielsweise an den beiden gegenüberliegenden Enden der Stoffhülle 12 jeweils durch eine Naht 13 befestigt. Bei dieser Befestigungsart ist die Naht 13 von außen sichtbar. Jedoch ist diese Art des Einnähens einfach ausführbar und erfordert keine aufwendigen technischen Hilfsmittel, wodurch die erfindungsgemäße Stoffhülle preiswert herstellbar ist.

Eine weitere Art, den Reißverschluss 11 an der Stoffhülle 12 zu befestigen, zeigt Fig. 2 (B). Hier ist der Reißverschluss 11 gemäß der dritten Ausführungsform der vorliegenden Erfindung an den um 180° umgeschlagenen Enden der sich gegenüberliegenden Enden der Stoffhülle 12 durch verborgene Nähte 13 befestigt. Bei dieser Ausführungsform erhält man eine verdeckte oder von außen nicht sichtbare Naht 13. Zudem wird der Reißverschluss 11 teilweise oder vollständig durch den entstehenden Saum 14 bedeckt, was das Erscheinungsbild der Sonnenblende 20 verbessert, sollte die Naht in einem durch die Fahrzeuginsassen sichtbaren Bereich angebracht sein, beispielsweise an der den Kraftfahrzeuginsassen zugewandten Stirnseite 23, siehe Fig. 2 (C) der Sonnenblende 20.

### Bezugszeichen:

- 1,1': Blaswerkzeugshälften
- 2: Kunststoffschlauch
- 3: Druckluftleitung
- 4: Innenfläche der Blaswerkzeughälften 1,1'
- 5: Kante der Blaswerkzeughälfte
- 6: Sonnenblendenkörper
- 10: Sonnenblendenkörper unterschiedlicher Oberflächengestaltung
- 11: Reißverschluss
- 12: Stoffhülle
- 13: Naht
- 14: Saum
- 20: Sonnenblende mit Stoffhülle
- 22, 23: Sonnenblendenstirnseite
- 25: Sonnenblendenkörper
- 27: Lagerachse

## Patentansprüche

1. Sonnenblende, aufweisend:
a) einen Sonnenblendenkörper (25) und
b) eine Stoffhülle (12), wobei die Stoffhülle (12) einen Reißverschluss (11) aufweist, **dadurch gekennzeichnet, dass**
c) die Stoffhülle (12) den Sonnenblendenkörper (25) im wesentlichen vollständig ummantelt.

2. Sonnenblendkörper (25) nach Anspruch 1, **dadurch gekennzeichnet, dass** der Reißverschluss (11) an sich gegenüberliegenden Enden der Stoffhülle (12) oder an um 180°-umgeschlagenen, sich gegenüberliegenden Enden der Stoffhülle (12) befestigt ist

3. Sonnenblendkörper (25) nach Anspruch 2, **dadurch gekennzeichnet, dass** der Reißverschluss (11) durch die Enden der Stoffhülle (12) teilweise oder vollständig abgedeckt ist.

4. Sonnenblendenkörper (25) nach einem der Ansprüche 1 bis 3, **dadurch gekennzeichnet, dass** der Reißverschluss (11) an einer der Stirnseiten (22, 23) des Sonnenblendenkörpers (25) positioniert ist.

5. Sonnenblendenkörper (25) nach Anspruch 4, **dadurch gekennzeichnet, dass** der Reißverschluss (11) an der Stirnseite (22) in unmittelbarer Nachbarschaft zur Lagerachse (27) der Sonnenblende (20) angeordnet ist.

## Claims

1. A sun visor comprising:
a) a sun visor body (25) and
b) a fabric covering (12), wherein the fabric covering (12) comprises a zipper (11), **characterised in that**
c) the fabric covering (12) covers substantially completely the sun visor body (25).

2. Sun visor body (25) according to claim 1, **characterised in that** the zipper (11) is mounted at opposite ends of the fabric covering (12) or at opposite ends of the fabric covering (12) which are turned up 180°.

3. A sun visor body (25) according to claim 2, **characterised in that** the zipper (11) is covered partly or completely by the ends of the fabric covering (12).

4. A sun visor body (25) according to one of the claims 1 to 3, **characterised in that** the zipper (11) is positioned at one of the front faces (22, 23) of the sun visor body (25).

5. A sun visor body (25) according to claim 4, **characterised in that** the zipper (11) at the front face (22) is arranged directly adjacent to the bearing axis (27) of the sun visor (20).

## Revendications

1. Pare-soleil comprenant a) un corps de pare-soleil (25) et b) une housse en tissu (12), la housse en tissu (12) comportant une fermeture à glissière (11), **caractérisé en ce que** c) la housse en tissu (12) enveloppe sensiblement entièrement le corps de pare-soleil (25).

2. Corps de pare-soleil (25) selon la revendication 1, **caractérisé en ce que** la fermeture à glissière (11) est fixée à des extrémités en vis-à-vis de la housse en tissu (12) ou à des extrémités en vis-à-vis, rabattues de 180°, de la housse en tissu (12).

3. Corps de pare-soleil (25) selon la revendication 2, **caractérisé en ce que** la fermeture à glissière (11) est recouverte partiellement ou entièrement par les extrémités de la housse en tissu (12).

4. Corps de pare-soleil (25) selon une des revendications 1 à 3, **caractérisé en ce que** la fermeture à glissière (11) est positionnée sur un des côtés frontaux (22, 23) du corps de pare-soleil (25).

5. Corps de pare-soleil (25) selon la revendication 4, **caractérisé en ce que**, sur le côté frontal (22), la fermeture à glissière (11) est disposée au voisinage immédiat de l'axe d'appui (27) du pare-soleil (20).
